(19) Europäisches Patentamt
European Patent Office
Office européen des brevets

(11) **EP 4 241 985 A1**

(12) **EUROPEAN PATENT APPLICATION**

(43) Date of publication:
**13.09.2023 Bulletin 2023/37**

(21) Application number: **22161578.4**

(22) Date of filing: **11.03.2022**

(51) International Patent Classification (IPC):
**B32B 27/08** (2006.01)  **B32B 27/32** (2006.01)

(52) Cooperative Patent Classification (CPC):
**B32B 27/08; B32B 27/32;** B32B 2250/03;
B32B 2250/05; B32B 2250/242; B32B 2250/40;
B32B 2264/1021; B32B 2264/12; B32B 2270/00;
B32B 2272/00; B32B 2274/00; B32B 2307/21;
B32B 2307/51; B32B 2307/54; B32B 2307/5825;

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **SWAGTEN-LINSSEN, Josefien**
**6161 Sittard-Geleen (NL)**

• **ALABRUNE, Arnaud**
**92400 Courbevoie (FR)**
• **SCHUSTER, Gerhard**
**4021 Linz (AT)**
• **SEMAAN, Chantal**
**08008 Barcelona (ES)**
• **MANDARD, Barbara**
**3583 Beringen (BE)**

(74) Representative: **Dehns**
**St. Bride's House**
**10 Salisbury Square**
**London EC4Y 8JD (GB)**

(54) **MULTILAYER FILM**

(57) A multilayer film comprising at least three layers, two outer layers and a core layer, wherein the core layer comprises:
10 to 40 wt%, (such as 10 to 24.5 wt%) based on the total weight of the layer, of an ethylene plastomer with a density of 865 to 915 kg/m³; and
15 to 60 wt%, based on the total weight of the layer, of a heterophasic polypropylene copolymer;
said outer layers independently comprising 50 wt% or more, based on the weight of the layer, of a unimodal or multimodal linear low density polyethylene having a density of 908 to 935 kg/m³;
wherein said multilayer film comprises less than 5 wt% of ethylene vinyl acetate.

EP 4 241 985 A1

(52) Cooperative Patent Classification (CPC): (Cont.)
 B32B 2307/732; B32B 2307/746; B32B 2553/00

## Description

The present invention relates to a multilayer film for stretch hood applications. In particular, the invention relates to a multilayer film, free of ethylene vinyl acetate (EVA), in which the core layer comprises a post consumer resin (PCR) or a blend of an ethylene plastomer and a heterophasic polypropylene copolymer with outer layers comprising unimodal or multimodal LLDPE. The resulting films have excellent properties for stretch hoods.

## Background of Invention

Many stretch hoods on the market utilise ethylene vinyl acetate in a 3 layer construction. EVA is an expensive polymer and it is a polymer which is sensitive to temperature leading to different performance behaviour depending on the ambient temperature.

The presence of EVA also limits the ability to recycle the film. For example, during the recycling process, EVA can break down to generate acid by-products which can degrade any recycling feedstock. Ideally, its presence should therefore be avoided.

The present inventors sought a new stretch hood design, ideally a 5 layer design, with excellent mechanical properties which is readily processable. Moreover, the stretch hood of the invention should be one that preferably incorporates a recycled component, e.g. an rLDPE or rLLDPE based recyclate. Finally, the stretch hoods of the invention should be free of EVA.

These properties are ideally achieved without more than 45 wt% ethylene plastomer in any subskin layer and ideally without more than 25 wt% ethylene plastomer in core layer.

In WO2018/096015, multilayer films for stretch hoods are described although not exemplified. The films described comprise three layers with a plastomer and LLDPE in the core.

In WO2011/159376 there is a disclosure of an ethylene composition for use as a blend component in a shrink film.

The present inventors have devised a new multilayer film that is ideal for stretch hood applications due to its stretchability and subsequent elastic recovery. The films also retain stiffness after being applied to a target package. The films also have good mechanical performance and excellent holding force to efficiently protect the packaged goods. The films possess high tear strength, tensile Force, ultimate tensile strength, and elongation at break in both machine direction and transverse direction.

This is achieved without the use of EVA thus maximising the recyclability of the film.

Films comprising EVA can be temperature sensitive and show large differences in their mechanical performance, when the ambient temperatures are extremely high or extremely low. The avoidance of EVA also reduces risks associated with variable mechanical performance.

## Summary of Invention

Viewed from one aspect the invention provides a multilayer film comprising at least three layers, two outer layers and a core layer, wherein the core layer comprises:

10 to 40 wt%, based on the total weight of the layer, of an ethylene plastomer with a density of 865 to 915 kg/m$^3$; and
15 to 60 wt%, based on the total weight of the layer, of a heterophasic polypropylene copolymer,
said outer layers independently comprising 50 wt% or more, based on the weight of the layer, of a unimodal or multimodal linear low density polyethylene having a density of 908 to 935 kg/m$^3$;
wherein said multilayer film comprises less than 5 wt% of ethylene vinyl acetate based on the weight of the multilayer film.

Viewed from another aspect the invention provides a multilayer film comprising at least three layers, two outer layers and a core layer, wherein the core layer comprises:

10 to 25 wt%, (such as 10 to 24.5 wt%) based on the total weight of the layer, of an ethylene plastomer with a density of 865 to 915 kg/m$^3$;
15 to 60 wt%, based on the total weight of the layer, of a multimodal linear low density polyethylene having a density of 908 to 935 kg/m$^3$; and
15 to 60 wt%, based on the total weight of the layer, of a heterophasic polypropylene copolymer;
said outer layers independently comprising 50 wt% or more, based on the weight of the layer, of a unimodal or multimodal linear low density polyethylene having a density of 908 to 935 kg/m$^3$;
wherein said multilayer film comprises less than 5 wt% of ethylene vinyl acetate based on the weight of the multilayer film.

Viewed from another aspect the invention provides a multilayer film comprising at least five layers, two outer layers, two subskin layers and a core layer, wherein the core layer comprises:

10 to 40 wt%, based on the total weight of the layer, of an ethylene plastomer with a density of 865 to 915 kg/m$^3$; and
15 to 60 wt%, based on the total weight of the layer, of a heterophasic polypropylene copolymer;
wherein the subskin layers independently comprise 10 to 60 wt%, based on the weight of the layer, of an ethylene plastomer with a density between 865 and 915 kg/m$^3$;
said outer layers independently comprising 50 wt% or more, based on the weight of the layer, of a unimodal or multimodal linear low density polyethylene copolymer having a density of 908 to 935 kg/m$^3$;
wherein said multilayer film comprises less than 5 wt% of ethylene vinyl acetate based on the weight of the multilayer film.

Viewed from another aspect the invention provides a multilayer film comprising at least five layers, two outer layers, two subskin layers and a core layer, wherein the core layer comprises:

10 to 25 wt%, based on the total weight of the layer, of an ethylene plastomer with a density of 865 to 915 kg/m$^3$;
15 to 60 wt%, based on the total weight of the layer, of a multimodal linear low density polyethylene having a density of 908 to 935 kg/m$^3$; and
15 to 60 wt%, based on the total weight of the layer, of a heterophasic polypropylene copolymer;
wherein the subskin layers independently comprise 10 to 60 wt% (such as 10 to 44.5 wt%), based on the weight of the layer, of an ethylene plastomer with a density between 865 and 915 kg/m$^3$;
said outer layers independently comprising 50 wt% or more, based on the weight of the layer, of a unimodal or multimodal linear low density polyethylene having a density of 908 to 935 kg/m$^3$;
wherein said multilayer film comprises less than 5 wt% of ethylene vinyl acetate based on the weight of the multilayer film based on the weight of the multilayer film.

Viewed from another aspect the invention provides a multilayer film comprising at least three layers, two outer layers and a core layer, wherein the core layer comprises:

at least 75 wt% of a post-consumer or post industrial resin rLDPE and/or rLLDPE;
said outer layers independently comprising 50 wt% or more, based on the weight of the layer, of a unimodal or multimodal linear low density polyethylene having a density of 908 to 935 kg/m$^3$;
wherein said multilayer film comprises less than 5 wt% of ethylene vinyl acetate.

Viewed from another aspect the invention provides a multilayer film comprising at least five layers, two outer layers, two subskin layers and a core layer, wherein the core layer comprises:

at least 75 wt%, based on the weight of the layer, of a post-consumer or post industrial resin rLDPE and/or rLLDPE;
wherein the subskin layers independently comprise 10 to 60 wt% (such as 10 to 44.5 wt%), based on the weight of the layer, of an ethylene plastomer with a density between 865 and 915 kg/m$^3$;
said outer layers independently comprising 50 wt% or more, based on the weight of the layer, of a unimodal or multimodal linear low density polyethylene having a density of 908 to 935 kg/m$^3$;
wherein said multilayer film comprises less than 5 wt% of ethylene vinyl acetate based on the weight of the multilayer film.

Viewed from another aspect the invention provides the use of the multilayer film as hereinbefore defined for stretch hood applications.
Viewed from another aspect the invention provides a process for wrapping an object, such as a pallet of goods, in a protective covering comprising wrapping at least the top and sides of the object in a stretch hood as hereinbefore defined and and allowing the elastic recovery in the stretch hood to provide a holding force around the packed object.
In any embodiment of the invention it is preferred that the core layer is different to the outer layers. In any embodiment of the invention it is preferred that the core layer is different to the subskin layers. In any embodiment of the invention it is preferred that the subskin layers are different to the outer layers. In any embodiment of the invention it is preferred that the subskin layers are both the same. In any embodiment of the invention it is preferred that the outer layers are both the same.

**Detailed Description of Invention**

The present invention defines a multilayer film, such as a 3 layer or 5 layer film or 7 layer film. Films of the invention should comprise an odd number of layers. The use of a 5 layer film is preferred. These films are ideally suited for stretch hood applications. The multilayer film of the invention comprises a core layer, two outer layers and optional subskin layers between the core and outer layers. Any film of the invention ideally has an odd number of layers. Films of the invention are ideally symmetrical, i.e. the two outer layers are the same and the two subskin layers are the same (although not the same as the outer layers).

Films of the invention comprise less than 5 wt% of ethylene vinyl acetate, such as less than 2.5 wt% EVA, especially are essentially free of EVA. These wt% values are based on the film as a whole.

In general, no layer of the invention should comprise EVA (although it is possible that some EVA might be present as part of the recycled component).

**Core layer**

The core layer of the film is the central layer and there must be at least two outer layers either side of the core layer. In a three layer film therefore, the core layer is the central layer. In a 5 layer film the core layer is also the central layer. Preferred films of the invention have an odd number of layers and the core layer is the central layer in such a construction.

The core layer comprises 10 to 40 wt%, preferably 10 to 25 wt%, especially 10 to 24.5 wt% based on the total weight of the layer, of an ethylene plastomer with a density of 865 to 915 $kg/m^3$; and 15 to 60 wt%, based on the total weight of the layer, of a heterophasic polypropylene copolymer. Preferably the core layer also comprises 15 to 60 wt%, based on the total weight of the layer, of a multimodal linear low density polyethylene having a density of 908 to 935 $kg/m^3$.

**Ethylene plastomer**

The term polyethylene plastomer (or just ethylene plastomer) means herein a very low density polyethylene polymer made in a known low pressure solution process. The term "plastomer" is used herein to cover a polyethylene having a density from 865 to 915 $kg/m^3$, such as 868 to 907 $kg/m^3$. Preferred density ranges are 865 to 905 $kg/m^3$, such as 870 to 905 $kg/m^3$. The plastomers of the invention may also be termed elastomers in the art.

Typically, the polyethylene plastomer is an ethylene copolymer with at least one $C_{4-10}$ alpha olefin such as 1-octene. It is most preferred therefore if the ethylene plastomer is an ethylene octene copolymer.

The polyethylene plastomer preferably has a density in the range of 865 to 905 $kg/m^3$. Polyethylene plastomers preferably have a density of 905 $kg/m^3$ or less, more suitably less than or equal to 903 $kg/m^3$. The density usually is 868 $kg/m^3$ or more, more preferably 870 $kg/m^3$ or more. A highly preferred range is 870 to 890 $kg/m^3$.

In one embodiment the polyethylene plastomer is prepared with a single site catalyst. In some embodiments, the polyethylene plastomer is a substantially linear ethylene polymer (SLEP). SLEPs and other metallocene catalysed polyethylene plastomers are known in the art, for example, US 5,272,236. These resins are also commercially available, for example, as Queo™ polyethylene plastomers available from Borealis, Affinity or Engage polyethylene plastomer resins available from Dow Chemical Co as well as Cohere available from Sabic, Tafmer or Evolue available from Mitsui; Supreme available SK Nexlene; Exact by Exxon or Lucene from LG Chemical.

In one embodiment of the invention the $MFR_2$ of the polyethylene plastomer suitably is 0.5 to 50 g/10 min, more suitably 0.5 to 35 g/10 min. A more preferred range is 0.5 to 5.0 g/10 min.

The polyethylene plastomer is preferably a blend of at least two fractions. The polyethylene plastomer blend can be a mechanical blend or an *in situ* blend as in WO92/12182. In a preferred embodiment the polyethylene plastomer comprises:

(I) a first polyethylene plastomer fraction with density of 885 to 920 $kg/m^3$ and $MFR_2$ of 15 to 50 g/10 min,
(II) a second polyethylene plastomer fraction with density of 840 to 880 $kg/m^3$ and MFR2 of 0.5 to 10 g/10 min;

and the amounts of the first and second fraction of polyethylene plastomer are present in an amount of at least 10 wt-% of the polyethylene plastomer.

More preferably, the polyethylene plastomer comprises:

(I) a first polyethylene plastomer fraction with density of 890 to 910 $kg/m^3$ and $MFR_2$ in the range of 20 to 40 g/ 10 min,
(II) a second polyethylene plastomer fraction with density of 860 to 875 $kg/m^3$ and $MFR_2$ in the range of 0.5 to 5 g/10 min,

and the amounts of the first and second fraction of polyethylene plastomer are present in an amount of at least 10 wt-% of the polyethylene plastomer.

The amount of the first polyethylene plastomer fraction with high density and high $MFR_2$ is suitably present in an amount of 50 to 90 wt-% of the polyethylene plastomer, more suitably 70 to 90 wt-%. The amount of the second polyethylene plastomer fraction with low density and low $MFR_2$ is suitably present in an amount of 10 to 50 wt-% of the polyethylene plastomer, more suitably 10 to 30 wt-%. The $MFR_2$ of the polyethylene plastomer blend suitably is 1 to 30 g/ 10 min, more suitably 5 to 25 g/ 10 min.

To calculate the $MFR_2$ of the polyethylene plastomer blend the log-additivity rule shall be used:

$$\log F = \sum_i w_i \log F_i$$

where $w_i$ is the weight percentage of the fraction i and $F_i$ is $MFR_2$ of fraction i.

In one embodiment of the invention the amount of polyethylene plastomer in the core layer is from 10 to 25 wt%, suitably from 12 to 25 wt% and most suitably from 15 to 24.5 wt%. If two or more polyethylene plastomers are used then these percentages refer to the total of all polyethylene plastomers present.

**Heterophasic Polypropylene Copolymer**

The core layer of the multilayer films of the invention may also comprise a heterophasic polypolypropylene copolymer. Such a copolymer typically has an $MFR_2$ of 0.05 to 100 g/lOmin, such as 0.1 to 20 g/lOmin, especially 0.5 to 5.0 g/lOmin.

In one embodiment, a heterophasic polypolypropylene copolymer of the invention comprises

(i) at least 50 wt% of a propylene homopolymer or propylene ethylene copolymer matrix component typically having up to 4 wt% ethylene; and

(ii) at least 15 wt% of an ethylene propylene rubber (EPR) dispersed in the matrix.

The first component (i) is typically crystalline and second component (ii) typically amorphous and hence the polymer as a whole is a heterophasic polypolypropylene copolymer.

The heterophasic polypropylene copolymer of the invention preferably has an $MFR_2$ of 0.05 to 20 g/lOmin (ISO 1133 at 230°C with a loading of 2.16 kg). It may have a melting point (Tm) of 130 to 150°C (measured by DSC according to ISO 11357).

Ideally, the heterophasic polypropylene copolymer comprises at least the following components:

(A) 55.0 to 95.0 wt% of a crystalline fraction (CF) having a comonomer content of 0 to 3.0 wt%; and

(B) 5.0 to 45.0 wt% of a soluble fraction (SF) having a comonomer content of 12 to 45 wt% (wherein the amount of crystalline fraction (CF) and the amount of soluble fraction

(SF) are determined in 1,2,4-trichlorobenzene at 40°C.)

In some embodiments the intrinsic viscosity (IV) (in decalin at 135°C) of the soluble fraction (SF) is 2.5 to 11 dl/g,

In a preferred embodiment, the heterophasic polypropylene copolymer of the invention has an $MFR_2$ of 0.1 to 20 g/10min (ISO 1133 at 230°C with a loading of 2.16 kg) wherein the heterophasic polypropylene copolymer comprises at least the following components:

(A) 55.0 to 80.0 wt% of a crystalline fraction (CF) having a comonomer content of 0 to 3.0 wt%; and

(B) 20.0 to 45.0 wt% of a soluble fraction (SF) having a comonomer content of 12 to 40 wt%;

wherein the intrinsic viscosity (IV) (in decalin at 135°C) of the crystalline fraction (CF) is 1.5 to 5.0 dl/g;
wherein the intrinsic viscosity (IV) (in decalin at 135°C) of the soluble fraction (SF) is 4.5 to 11 dl/g, and
wherein the amount of crystalline fraction (CF) and the amount of soluble fraction (SF) are determined in 1,2,4-trichlorobenzene at 40°C.

In a preferred embodiment, the heterophasic polypropylene copolymer of the invention has an $MFR_2$ of 0.05 to 2.5 g/lOmin (ISO 1133 at 230°C with a loading of 2.16 kg),

wherein the heterophasic polypropylene copolymer comprises at least the following components:

(A) 75.0 to 95.0 wt% of a crystalline fraction (CF) having a comonomer content of 0 to 2.0 wt%; and

(B) 5.0 to 25.0 wt% of a soluble fraction (SF) having a comonomer content of 12 to 45 wt%;

wherein the intrinsic viscosity (IV) (in decalin at 135°C) of the soluble fraction (SF) is 2.5 to 10 dlL/g, and wherein the amount of crystalline fraction (CF) and the amount of soluble fraction (SF) are determined in 1,2,4-trichlorobenzene at 40°C.

The heterophasic propylene copolymers (HECOs) of the invention effectively comprise a polymer matrix (M) being a propylene homopolymer (hPP) or a random propylene-ethylene or propylene- ethylene-1-butene copolymer (rPP) or a combination of the two, in which a mostly amorphous copolymer (B), like a propylene-ethylene copolymer (EP), is dispersed (i.e. rubber phase, such as EPR).

Thus, the polypropylene matrix (M) contains (finely) dispersed inclusions being not part of the matrix and said inclusions contain the amorphous copolymer (B). The matrix component (M) can be considered the crystalline fraction (or insoluble fraction). The amorphous or rubber fraction can be considered the soluble fraction (SF).

The term "heterophasic polypropylene copolymer" used herein denotes copolymers comprising a matrix fraction, being a polypropylene homopolymer or a propylene copolymer and a predominantly amorphous copolymer (B) dispersed in said matrix, as defined in more detail below.

**Matrix (M)/ crystalline fraction (CF)**

The embodiments which follow apply equally to the matrix component /crystalline fraction. The crystalline fraction is that part of the heterophasic polypropylene copolymer which is insoluble in 1,2,4-trichlorobenzene at 40°C.

The matrix (M)/ crystalline fraction of the heterophasic polypropylene copolymer is preferably a propylene homopolymer or a semicrystalline propylene-ethylene or propylenebutene copolymer or a propylene-ethylene butene copolymer or a combination thereof. The term "semicrystalline" indicates that the copolymer has a well-defined melting point and a heat of fusion higher than 50 J/g.

The comonomer content in this component is low, i.e. 2.0 wt% or less, more preferably there is less than 1.0 wt% comonomer in the matrix component/ crystalline fraction, such as 0.5 wt% or less. Ideally, the matrix component/ crystalline fraction is a propylene homopolymer. If a comonomer is present, this is preferably ethylene.

In one embodiment the matrix (M)/ crystalline fraction comprises the homopolymer of propylene as defined above or below, preferably consists of the homopolymer of propylene as defined above or below.

The matrix component may have a melting point (Tm) of 156 to 162°C, preferably 158 to 161°C.

The $MFR_2$ of the matrix component/ crystalline fraction (A) may be in the range of 0.01 to 15 g/10 min, such 0.1 to 10 g/lOmin, preferably 0.1 to 4.0 g/lOmin.

In one embodiment, there is 80.0 to 95.0 wt% of the component (A) in the heterophasic polypropylene copolymer, preferably 85.0 to 95.0 wt% of component (A).

In a second embodiment, there is 65.0 to 85.0 wt% of component (A), preferably 70.0 to 80.0 wt% of component (A).

**Amorphous propylene copolymer/soluble fraction:**

The second component of the heterophasic polypropylene copolymer is a propylene copolymer fraction (B), which is preferably an amorphous copolymer of propylene and ethylene. The amorphous propylene copolymer may also be amorphous propylene-ethylene-1-butene copolymer.

Thus, the second component is preferably an elastomeric copolymer, being dispersed in said matrix (M) (i.e. dispersed phase).

As stated above, the terms "amorphous (propylene-ethylene) copolymer", "dispersed phase" and "rubber phase" denote the same, i.e. are interchangeable in view of this invention.

The amorphous propylene-ethylene copolymer (B) is fully soluble in xylene at room temperature.

The amorphous propylene-ethylene copolymer (B) is fully soluble in in 1,2,4-trichlorobenzene (1,2,4-TCB).

In one embodiment, component (B) forms 5.0 to 25.0 wt% of the polymer, preferably 5.0 to 20.0 wt%, more preferably5.0 to 15.0 wt%.

In a second embodiment component (B) forms 35.0 to 15.0 wt% of the polymer, preferably 30.0 to 20.0 wt%.

The comonomer content, such as ethylene content, of the amorphous fraction/soluble fraction may be between 12 and 40 wt%, preferably 18 and 40 wt%, such as 20 to 40 wt%.

The soluble fraction is generally a random copolymer. It is preferably dispersed within the matrix and that is best achieved by producing the EPR phase after the matrix in a multistage polymerisation reaction as defined below.

The $MFR_2$ of the soluble fraction is preferably more than 0.01 g/10 min, preferably more than 0.05 g/lOmin, more preferably more than 0.1 g/10 min, especially more than 0.2 g/lOmin. The upper limit or the $MFR_2$ of the soluble fraction is preferably 10 g/10 min.

If the MFR values of a component cannot be measured directly, they can be calculated from intrinsic viscosity measurements based on the correlations defined in C. Grein, M. Gahleitner, B. Knogler & S. Nestelberger, Melt viscosity effects in EthylenePropylene Copolymers, Rheol.Acta, 46 (2007) 1083-1089. From the MFR of the total polymer and the MFR of the soluble fraction (SF), the MFR of the matrix component of an impact copolymer can be calculated using a logarithmic mixing rule, i.e. using the following equation

$$\log F = \sum_i w_i \log F_i$$

where $w_i$ is the weight percentage of the fraction i and Fi is $MFR_2$ of fraction i.

In all embodiments of the invention, the intrinsic viscosity of the soluble fraction IV(SF) is preferably at least 2.5 dl/g, such as at least 3.0 dl/g. The upper limit may be 11 dl/g, such as 10 dl/g. It is however beneficial if the IV(SF) is at least 3.5 dl/g, more preferably at least 4.0 dl/g, such as 4.5 to 10 dl/g, especially 5.0 to 9.0 dl/g, most especially 5.5 to 8.0 dl/g, wherein the intrinsic viscosity (SF) is measured in decalin at 135°C.

Heterophasic polypolypropylene copolymers are known and can be purchased from suppliers.

In one embodiment of the invention the amount of heterophasic polypolypropylene copolymer in the core layer is from 15 to 60 wt%, suitably from 20 to 50 wt-% and most suitably from 25 to 45 wt-%. If two or more heterophasic polypolypropylene copolymers are used then these percentages refer to the total of all heterophasic polypolypropylene copolymers present.

**Multimodal linear low density polyethylene**

The core layer of the multilayer film may also comprises a multimodal LLDPE having a density of 908 to 935 kg/m³.

The term "multimodal" means, if otherwise not specified, multimodality with respect to molecular weight distribution and includes bimodal polymers.

Usually, a polyethylene comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE, there is by definition a lower molecular weight component (LMW) and a higher molecular weight component (HMW). The LMW component has a lower molecular weight than the higher molecular weight. Typically the difference is at least 5000 g/mol. However, the difference in Mw is more easily observed through an analysis of the MFR of the components.

In a multimodal LLDPE of use in this invention at least one of the LMW and HMW components is a copolymer of ethylene. Preferably, at least HMW component is an ethylene copolymer. It is also possible for the lower molecular weight (LMW) component to be an ethylene copolymer. Alternatively, if one of the components is a homopolymer, then LMW is the preferably the homopolymer. The combination of a LMW homopolymer and HMW ethylene copolymer is especially preferred.

The multimodal LLDPE may comprise up to 5.0 % by weight of a well-known polyethylene prepolymer (obtainable from a prepolymerisation step as well known in the art). In case of such prepolymer, the prepolymer component is comprised in one of LMW and HMW components, preferably LMW component, as defined above.

The term "ethylene copolymer" is used in this context to encompass polymers comprising repeat units deriving from ethylene and at least one other $C_{3-12}$ alpha olefin monomer. Ethylene obviously forms the major monomer unit present. Preferred copolymers are binary and comprise a single comonomer or are terpolymers and comprise two or three comonomers. Preferably, one or two comonomers are present in the multimodal LLDPE of the invention.

The multimodal LLDPE may have a density of 908 to 935 kg/m³, e.g. 915 to 935 kg/m³.

The melt flow rate, $MFR_2$ of the multimodal LLDPE is preferably in the range 0.01 to 20 g/lOmin, e.g. 0.05 to 10 g/lOmin, preferably 0.1 to 6.0 g/lOmin.

The $MFR_{21}$ of the multimodal LLDPE may be in the range 5 to 500, preferably 10 to 200 g/lOmin. The Mw of the multimodal LLDPE may be in the range 100,000 to 300,000, preferably 150,000 to 270,000.

It is an important feature that the multimodal LLDPE of the invention has a broad molecular weight distribution. This may be shown by the high $MFR_{21}/MFR_2$ value or a high Mw/Mn.

The $MFR_{21}/MFR_2$ of the multimodal LLDPE is preferably 50 to 200, such as 60 to 150, especially 70 to 120. This high value reflects the breadth of the molecular weight distribution.

The Mw/Mn of the multimodal LLDPE is preferably 10 or more, such as 10 to 50, especially the Mw/Mn of the LLDPE may be in the range 10 to 30, preferably 10 to 25. It is envisaged that the use of a broad molecular weight distribution multimodal LLDPE provides additional melt strength.

The multimodal LLDPE may be formed from ethylene along with at least one $C_{3-12}$ alpha-olefin comonomer, e.g. 1-butene, 1-hexene or 1-octene. The multimodal LLDPE may be a binary copolymer, i.e. the polymer contains ethylene and one comonomer, or a terpolymer, i.e. the polymer contains ethylene and two or three comonomers. Preferably, the multimodal LLDPE comprises an ethylene hexene copolymer, ethylene octene copolymer or ethylene butene copolymer, especially an ethylene butene copolymer.

As noted above, the polymers of the invention preferably comprise a lower molecular weight component (A) and a higher molecular weight component (B). The weight ratio of fraction (A) to fraction (B) in the composition is in the range 30:70 to 70:30, more preferably 35:65 to 65:35, most preferably 40:60 to 60:40. In some embodiments the ratio may be 45 to 55 wt% of fraction (A) and 55 to 45 wt% fraction (B), such as 45 to 52 wt% of fraction (A) and 55 to 48 wt% fraction (B). It has been found however that the best results are obtained when the HMW component is present at the same percentage or even predominates, e.g. 50 to 54 wt% of the HMW component (B) and 50 to 46 wt% fraction (A).

Fractions (A) and (B) may both be ethylene copolymers or ethylene homopolymers, although preferably at least one of the fractions is an ethylene copolymer. Preferably, the polymer comprises an ethylene homopolymer and an ethylene copolymer component.

Where one of the components is an ethylene homopolymer, this is preferably the component with the lower weight average molecular weight (Mw), i.e. fraction (A). An ideal polymer is therefore a lower molecular weight homopolymer component (A) with a higher molecular weight component (B), ideally an ethylene butene higher molecular weight component.

The lower molecular weight fraction (A) preferably has an $MFR_2$ of 10 g/lOmin or higher, more preferably of 50 g/lOmin or higher, and most preferably 100 g/10min or higher.

Furthermore, fraction (A) preferably, has an $MFR_2$ of 1000 g/10 min or lower, preferably 800 g/10 min or lower, and most preferably 600 g/lOmin or lower.

The weight average molecular weight Mw of fraction (A) preferably is 10 kD or higher, more preferably is 20 kD or higher. The Mw of fraction (A) preferably is 90 kD or lower, more preferably 80 kD or lower, and most preferably is 70 kD or lower.

Preferably, fraction (A) is an ethylene homo- or copolymer with a density of at least 965 kg/m³.

Most preferably, fraction (A) is an ethylene homopolymer. If fraction (A) is a copolymer, the comonomer is preferably 1-butene. The comonomer content of fraction (A), if it is a copolymer, is preferably very low, such as less than 0.2 mol%, preferably less than 0.1 mol%, especially less than 0.05 mol%. A further preferred option therefore, is for fraction (A) to be a homopolymer or a copolymer with a very low comonomer content, such as less than 0.2 mol%, preferably less than 0.1 mol%, especially less than 0.05 mol%. The higher Mw fraction (B) is then preferably a copolymer.

The higher molecular weight fraction (B) preferably has an Mw of 60 kD or higher, more preferably of 100 kD or higher. Furthermore, fraction (B) preferably has an Mw of 500 kD or lower, more preferably of 400 kD or lower.

Preferably, fraction (B) is an ethylene homo- or copolymer with a density of less than 965 kg/m³.

Most preferably, fraction (B) is a copolymer. Preferred ethylene copolymers employ alpha-olefins (e.g. C3-12 alpha-olefins) as comonomers. Examples of suitable alpha-olefins include but-1-ene, hex-1-ene and oct-1-ene. But-1-ene is an especially preferred comonomer.

Where herein features of fractions (A) and/or (B) of the composition of the present invention are given, these values are generally valid for the cases in which they can be directly measured on the respective fraction, e.g. when the fraction is separately produced or produced in the first stage of a multistage process. However, the composition may also be and preferably is produced in a multistage process wherein e.g. fractions (A) and (B) are produced in subsequent stages. In such a case, the properties of the fractions produced in the second step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

Most preferably however the multimodal LLDPE is a terpolymer.

**Multimodal LLDPE Terpolymer**

It is particularly preferred if the multimodal LLDPE is a multimodal LLDPE terpolymer, i.e. where there are two comonomers in addition to ethylene.

In one embodiment, the multimodal LLDPE terpolymer comprises an ethylene homopolymer component and an ethylene terpolymer component, e.g. with two C4, C6 or C8 alpha olefin comonomers.

Preferably however, the multimodal ethylene terpolymer comprises a first copolymer of ethylene and an alpha-olefin comonomer having from 4 to 10 carbon atoms and a second copolymer of ethylene and an alpha-olefin comonomer having from 6 to 10 carbon atoms. There must be at least two different comonomers present, i.e. both components cannot be ethylene hex-1-ene copolymers.

It is preferred if the comonomers present in the first and second copolymers are different. Ideally any comonomer used in the first copolymer is not used in the manufacture of the second copolymer.

Preferably the multimodal ethylene terpolymer is a terpolymer of ethylene and at least two comonomers selected from 1-butene, 1-hexene, and 1-octene.

It is further preferred that the multimodal ethylene terpolymer is a copolymer of ethylene and exactly two comonomers selected from 1-butene, 1-hexene, or 1-octene. Especially preferred is a multimodal ethylene copolymer comprising

- a first copolymer comprising ethylene and 1-butene, and

- a second copolymer comprising ethylene and 1-hexene.

Even more preferred is a multimodal ethylene terpolymer comprising

- a first copolymer consisting of ethylene and 1-butene and

- a second copolymer of ethylene consisting of ethylene and 1-hexene.

The multimodal ethylene terpolymer preferably has a final density $\rho$ of from 908 to 925 kg/m$^3$, preferably 910 to 925 kg/m$^3$ and more preferably from 913 to 923 kg/m$^3$.

The multimodal ethylene terpolymer has a melt flow rate MFR$_{21}$ of 10 - 200 g/10 min, preferably from 20 - 150 g/10 min, such as 25 - 100 g/min, such as 28 - 80 g/10 min. The resins having an MFR$_{21}$ of less than 10 g/10 min tend to have too high melt viscosity so that the throughput in a converting process may become restricted.

On the other hand, the resins having MFR$_{21}$ of more than 200 g/10 min have too low melt strength for the end use applications. In addition, the combination of a high melt index with a low density of the resin often causes the resin particles to be sticky and this causes problems in a particle forming process, such as plugging and fouling of process equipment. In addition, the multimodal ethylene copolymer can have a flow rate ratio FRR$_{21/5}$ of at least 15 or more, such as 20 or 23 or more. Furthermore, it can have a flow rate ratio FRR$_{21/5}$ in the range of 15 - 40, preferably in the range of 20 - 35.

The multimodal ethylene terpolymer preferably has a melt flow rate MFR$_5$ of 0.1 - 20 g/10 min, preferably from 0.5 - 10 g/10 min, such as 0.5- 8.0 g/min, especially 0.5 - 5.0 g/10 min. The MFR$_5$ is preferably from 0.8 to 4.0 g/10 min.

In one embodiment, the multimodal LLDPE terpolymer includes a "first copolymer" typically produced in a first polymerization step (preferably a loop reactor or loop reactors) and this copolymer may itself comprise two or more fractions, e.g. as defined in WO2017/186953. The fractions are further denominated as "first fraction of the first copolymer", "second fraction of the first copolymer", etc. There might be 15 to 60 wt% of multimodal linear low density polyethylene, preferably 30 to 65 wt%, especially 30 to 60 wt% of multimodal LLDPE in the core layer.

The core layer preferably forms 15 to 30 % of the film thickness.

### Outer Layers

The film of the invention comprise two outer layers. The outer layers preferably have the same composition.

The outer layers in the film of the invention ideally comprises a unimodal LLDPE or multimodal LLDPE as hereinbefore defined, preferably a multimodal LLDPE.

The unimodal LLDPE may have a density of 908 to 935 $kg/m^3$, e.g. 915-935 $kg/m^3$.

The melt flow rate, $MFR_2$ of the unimodal LLDPE is preferably in the range 0.01 to 20 g/lOmin, e.g. 0.05 to 10 g/lOmin, preferably 0.1 to 6.0 g/lOmin. The comonomer present in such a polymer is preferably 1-butene and/or 1-hexene and/or 1-octene.

In particular, the outer layer of the film comprises a multimodal linear low density polyethylene, especially a multimodal linear low density polyethylene terpolymer as hereinbefore defined. Preferred definitions for this component presented above in connection with the core layer also apply to the outer layer.

Each outer layer may comprise at least 50 wt%, such as at least 75 wt%, preferably at least 90 wt% of the unimodal or multimodal LLDPE.

In one embodiment, there are no other polymer components in the outer layer. The outer layer may however comprises standard additives as is well known in the art. These may be part of a masterbatch and hence may be carried on a polymer. The use of antiblocking agents and antistatic agents is especially preferred.

Each outer layer preferably forms 10 to 20 % of the film thickness.

### Sub skin layers

The sub skin layers (or intermediate layers) between the core layer and outer layer, if present, may also comprise a unimodal LLDPE or multimodal LLDPE as herein before defined, such as a multimodal linear low density polyethylene terpolymer. Preferred defnitions for this component presented above in connection with the core layer or outer layer also apply to the subskin layer. There are preferably two subskin layers present. In a film ABCDE therefore, subskin layers are layers B and D. Layers A and E are outer layers and layer C the core layer.

There might be 25 to 70 wt% of a unimodal or multimodal linear low density polyethylene, preferably 30 to 65 wt%, especially 30 to 60 wt% of unimodal or multimodal LLDPE in the sub skin layers.

The sub skin layers may also comprise an ethylene plastomer as hereinbefore defined such as 15 to 60 wt% of an ethylene plastomer, especially 15 to 45.5 wt% ethylene plastomer.

Preferred definitions for this component presented above in connection with the core layer also apply to the subskin layer.

The sub skin layers may also comprise a heterophasic polypropylene copolymer as hereinbefore defined. Preferred defnitions for this component presented above in connection with the core layer also apply to the subskin layer. There might be 25 to 70 wt% of a heterophasic polypropylene copolymer, preferably 30 to 65 wt%, especially 30 to 60 wt% of heterophasic polypropylene copolymer.

In one embodiment, the subskin layers are identical to the core layer in construction. If the sub skin layers are identical to the core layer in construction then it can be considered that the subksin and core layers are really a thicker single layer.

The subskin layers each preferably have the same composition.

Each subskin layer preferably forms 15 to 30 % of the film thickness, such as 20 to 30 % of the film thickness.

### Preparation of polymers

The polymers used in the films of the invention are commercially available. The unimodal or multimodal LLDPE, for example, is commercially available or can be produced in a known manner according to or analogously to conventional polymerisation processes described in the literature of polymer chemistry. Suitable grades include FK1820 and FK1828 from Borealis.

The heterophasic polypropylene copolymer is also commercially available. Suitable grades include BorSoft SA 233CF.

The ethylene plastomer is also commercially available, e.g. Queo plastomers. Processes for the production of the required polymers are well known and do not need to be described here.

**Post consumer resin or post industrial resin**

In a related embodiment, the invention provides a multilayer film comprising at least three layers, two outer layers and a core layer, wherein the core layer comprises:

at least 75 wt% of a post-consumer resin or post industrial resin component which is a rLDPE and/or rLLDPE;
said outer layers independently comprising 50 wt% or more, based on the weight of the layer, of a unimodal or multimodal linear low density polyethylene having a density of 908 to 935 kg/m$^3$.

The film of this aspect of the invention may also have subskin layers as described above. The outer and subskin layers are therefore as described above.

The unimodal or multimodal linear low density polyethylene of this aspect of the invention is as hereinbefore defined. Preferred features of the unimodal or multimodal LLDPE described above are therefore applicable to this aspect of the invention. Preferred outer and subskin layers of this aspect of the invention are the same as those described above.

The post consumer resin (PCR) or post industrial resin (PIR) in the core layer preferably comprises recycled LDPE and/or LLDPE. These are termed rLDPE and rLLDPE herein. It will be appreciated that rLDPE or rLLDPE feedstocks might contain other polymeric contaminants due to the nature of the recycling process. The feedstock might be a blend of rLDPE and rLLDPE or nominally pure rLDPE and rLLDPE.

In one embodiment, the core layer comprises at least 90 wt% PCR and/or PIR, such as at least 95 wt% PCR and/or PIR. A mixture of PCRs or PIRs or PCR and PIRs can also be used.

The rLDPE or rLLDPE or mixture of rLDPE and rLLDPE may have a density in the range of 908 to 935 kg/m$^3$.

The core layer in this embodiment may also comprise an ethylene plastomer as hereinbefore defined. There may be 5 to 25 wt% of such a plastomer, such as 15 to 24.5 wt%.

Any core layer in any film of the invention may form 10 to 30 % of the film thickness such as 15 to 25 % of the film thickness.

It will be appreciated that the core layer in a multilayer film should be different from the outer layers in the multilayer film of the invention. It is however possible for the subskin layers to be the same as the core layer. Such a film can be regarded either as an ABBBA type film or an ABA type film in which the identical subskin and core layers are simply treated as a thicker core layer.

In this scenario the core layer lay then represent 60 to 80 % of the thickness of the film.

**Film preparation**

The multilayer films of the invention may be produced by coextrusion through an annular die with a pressure difference applied to blow the extruded cylinder into a film and achieve the desired orientation within the film.

For film formation the polymer blend required for each layer is ideally intimately mixed with any other components present prior to coextrusion and blowing of the film as is well known in the art. It is especially preferred to thoroughly blend the components of each layer, for example using a twin screw extruder, preferably a counter-rotating extruder prior to extrusion and film blowing.

It is within the scope of the present invention that the films of the invention comprise additives as used in the art, such as phenolic stabilizers, antioxidants, slip and antistatic agents, antiblock agents, processing aids etc. These can be added into any layer although it will be appreciated that many of these additives should be present in the outer layers in order to function effectively.

Typically the compositions providing the layers of the film will be blown i.e. (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

**Film Properties**

The films of the invention typically have a thickness of 20 to 200 μm, such as 40 to 150 μm, especially 60 to 120 μm. Films of the invention are ideally not uniaxially or biaxially oriented.

Films of the invention preferably have a tear strength MD of 1200-1950 cN.

Films of the invention preferably have a tear strength TD of 1500-3000 cN.

Films of the invention preferably have a Tensile Force MD of 50-90 N.

Films of the invention preferably have a Tensile Force TD of 50-80 N.

Films of the invention preferably have a Ultimate Tensile strength MD of 20-45 MPa.

Films of the invention preferably have a Ultimate Tensile strength TD of 20-40 MPa.

Films of the invention preferably have a Elongation at Break MD of 775-950 %.

Films of the invention preferably have a Elongation at Break TD of 815-925 %.

In this regard MD is machine direction and TD transverse direction.

**Applications**

The films of the invention are preferably used in stretch hoods. A stretch hood is a highly stretchable plastic film that is wrapped around an item, e.g. a pallet. The elastic recovery keeps the items on the pallet tightly bound. As well as pallets, stretch hoods are used for bundling 25kg bags, smaller items such multipack food and beverage trays and the like.

The hood is stretched over the material to be packaged using a custom made machine and elastic recovery is used to keep the load tight. Packaged goods have improved stability of products or packages especially during transport, dust and water protection, tamper resistance, UV protection and shelf life extension.

The invention further relates to a process for wrapping an object, such as a pallet of goods, in a protective covering comprising wrapping at least the top and sides of the object in a stretch hood as claimed herein and allowing the stretch hood to shrink around the object.

The invention will now be described with reference to the following non-limiting examples.

**Determination methods**

Unless otherwise stated in the description or experimental part the following methods were used for the property determinations.

**Wt%:** % by weight

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene and at 230 °C for polypropylene. MFR may be determined at different loadings such as 2.16 kg ($MFR_2$) or 21.6 kg ($MFR_{21}$).

**Density**

PCR/PIR Low density polyethylene (rLDPE/rLLDPE): The density was measured according to ISO 1183-2. The sample preparation was executed according to ISO 1872-2 Table 3 Q (compression moulding).

Other PE: Density of the polyethylene was measured according to ISO 1183 / 1872-2B.

**Elongation at break, secant modulus and ultimate tensile strength** are measured according to ISO 527-3.

**Puncture resistance** (determined in Ball puncture (energy/J) at +23°C. The method is according to ASTM D 5748. Puncture properties (resistance, penetration distance) are determined by the resistance of film to the penetration of a probe (19 mm diameter) at a given speed (250mm/min).

**Tear resistance (determined as Elmendorf tear (N))**

The tear strength is measured using the ISO 6383/2 method. The force required to propagate tearing across a film specimen is measured using a pendulum device. The pendulum swings under gravity through an arc, tearing the specimen from pre-cut slit. The specimen is fixed on one side by the pendulum and on the other side by a stationary clamp. The tear strength is the force required to tear the specimen.

**Tensile Force:**

- Specimen geometry:, Rectangular strips cut from the film with 20 mm width, 50mm clamp distance
- Test speed : 500 mm/min.
- Extension was determined via marking on the film.
- Test speed (for determination of modulus): 5 mm/min.
- Secant modulus 1% measured between 0,05 and 1,05% elongation.

# EP 4 241 985 A1

**Holding force**

a. Specimen geometry: Rectangular strips cut from the film with 20 mm width, 50mm clamp distance
b. Test speed: 1000 mm/min.,
c. The specimen is stretched to an elongation of x % , held for 15 sec., then released to a released elongation of y % , held for 240 sec.
d. Holding force is measured at that point
e. Force is released to origin (0%), held for 15 sec., then the film is stretched until the force of 0,2 N is reached. This low loading level is chosen to ensure a straight film and allow accurate determination of the specimen length after the test.

Values x and y (Elongation and released elongation values) are chosen and combined as follows:

| Cycle | Elongation X [%] | Released elongation Y [%] |
|-------|------------------|---------------------------|
| 1 | 40 | 25 |
| 2 | 60 | 40 |
| 3 | 80 | 60 |
| 4 | 100 | 80 |

Each cycle is done on a fresh test specimen.

**Examples**

The following materials are used:

FK1820 — Multimodal LLDPE terpolymer, $MFR_2$ 1.5 g/lOmin dens 918 kg/m$^3$

PCR Nav 101 — Recycled LDPE, dens 920 kg/m$^3$

Queo 8201 — Ethylene plastomer, $MFR_2$ 1.1 g/lOmin dens 882 kg/m$^3$

Queo 7001LA — Ethylene plastomer, $MFR_2$ 1.0 dens 870 kg/m$^3$

Borsoft SA 223CF — Heterophasic PP copolymer, MFR2 0.8 g/lOmin

PPA — Polymer processing aid (as masterbatch)

**Preparation Method of Film Samples:** The film samples of the invention and of the reference example described below were coextruded on a 5-layer Windmöller&Hölscher coextrusion line with die diameter 200 mm, at a blow up ratio (BUR) 1:3, frost line height 600 mm, Die gap 1.2 mm, Extruder temp setting : 210°C to form a 100 $\mu$m film unless otherwise stated.

Comparative Film 1: (120 micron film)

| Layer distribution $\mu$m | **20.0** | **20.0** | **40.0** | **20.0** | **20.0** |
|---------------------------|----------|----------|----------|----------|----------|
| Layer | A | B | C | D | E |
| FK1820 | 95.5 | | | | 95.5 |
| EVA | | 99.4 | 99.4 | 99.4 | |
| PPA | 1.5 | 0.6 | 0.6 | 0.6 | 1.5 |
| Silica | 3 | | | | 3 |
| Total | 100.0 | 100.0 | 100.0 | 100.0 | 100.0 |

Inventive Film 2: - 100 micron film

| Layer thickness μm | 15.0 | 25.0 | 20.0 | 25.0 | 15.0 |
|---|---|---|---|---|---|
| Layer | A | B | C | D | E |
| FK1820 | 93.5 | 60 | 40 | 60 | 93.5 |
| Queo 8201 | | | 20 | | |
| Queo7001LA | | 40 | | 40 | |
| Borsoft SA233CF | | | 40 | | |
| Additives (PPA, antistat) | 3.5 | | | | 3.5 |
| Silica | 3 | | | | 3 |
| | 100.0 | 100.0 | 100.0 | 100.0 | 100.0 |

Inventive Film 4: - 100 micron film

| Layer thickness μm | 15.0 | 25.0 | 20.0 | 25.0 | 15.0 |
|---|---|---|---|---|---|
| Layer | A | B | C | D | E |
| FK1820 | 95.5 | 39.4 | 39.4 | 39.4 | 95.5 |
| Borsoft 233CF | | 40 | 40 | 40 | |
| Queo8201 | | 20 | 20 | 20 | |
| PPA | 1.5 | 0.6 | 0.6 | 0.6 | 1.5 |
| Silica | 3 | | | | 3 |
| | 100.0 | 100.0 | 100.0 | 100.0 | 100.0 |

Inventive Film 5: - 100 micron film

| Layer thickness μm | 15.0 | 25.0 | 20.0 | 25.0 | 15.0 |
|---|---|---|---|---|---|
| Layer | A | B | C | D | E |
| FK1820 | 95.5 | 54.4 | | 54.4 | 95.5 |
| Queo7001LA | | 45 | | 45 | |
| PCR | | | 99.4 | | |
| PPA | 1.5 | 0.6 | 0.6 | 0.6 | 1.5 |
| Silica | 3 | | | | 3 |
| Total | 100.0 | 100.0 | 100.0 | 100.0 | 100.0 |

Inventive Film 6: - 100 μm film

| Layer thickness μm | 15.0 | 25.0 | 20.0 | 25.0 | 15.0 |
|---|---|---|---|---|---|
| Layer | A | B | C | D | E |
| FK1820 | 95.5 | 54.4 | | 54.4 | 95.5 |
| Queo7001LA | | 45 | 20 | 45 | |
| PCR | | | 79.4 | | |
| PPA | 1.5 | 0.6 | 0.6 | 0.6 | 1.5 |

(continued)

| Layer thickness μm | 15.0 | 25.0 | 20.0 | 25.0 | 15.0 |
|---|---|---|---|---|---|
| Silica | 3 | | | | 3 |
| Total | 100.0 | 100.0 | 100.0 | 100.0 | 100.0 |

Inventive Film 7: - 100 micron film

| Layer thickness μm | 15.0 | 25.0 | 20.0 | 25.0 | 15.0 |
|---|---|---|---|---|---|
| Layer | A | B | C | D | E |
| FK1820 | 95.5 | 54.4 | 40 | 54.4 | 95.5 |
| Queo8201 | | | 20 | | |
| Queo7001LA | | 45 | | 45 | |
| PCR | | | 39.4 | | |
| PPA | 1.5 | 0.6 | 0.6 | 0.6 | 1.5 |
| Silica | 3 | | | | 3 |
| Total | 100.0 | 100.0 | 100.0 | 100.0 | 100.0 |

Inventive Film 8: - 100 micron film

| Layer thickness μm | 15.0 | 25.0 | 20.0 | 25.0 | 15.0 |
|---|---|---|---|---|---|
| Layer | A | B | c | D | E |
| FK1820 | 95.5 | 54.4 | | 54.4 | 95.5 |
| Queo8201 | | 45 | | 45 | |
| Borsoft 233CF | | | 99.4 | | |
| PPA | 1.5 | 0.6 | 0.6 | 0.6 | 1.5 |
| Silica | 3 | | | | 3 |
| Total | 100.0 | 100.0 | 100.0 | 100.0 | 100.0 |

The films of the invention were subjected to mechanical testing. Data is presented in Tables 1 to 2. The films of the invention exhibit excellent mechanical properties despite being free of EVA. The films of the invention are therefore more recyclable and environmentally friendly whilst at the same time offering better or at least comparable mechanical performance.

| Table 1 | | Comp. Film 1 | Film 4 | Film 5 | Film 6 | Film 7 | Film 8 |
|---|---|---|---|---|---|---|---|
| Tear strength MD | cN | 1256 | 1240 | 1695 | 1910 | 1622 | |
| Tear strength TD | cN | 2020 | 1638 | 2140 | 2825 | 1748 | |
| Tear strength MD | cN/um | 9.97 | 12.4 | 15.99 | 18.02 | 15.75 | |
| Tear strength TD | cN/um | 16.03 | 16.38 | 20.19 | 26.65 | 16.97 | |
| Tensile Force MD | N | 72.3 | 80 | 50.3 | 54.1 | 80 | 84.8 |
| Tensile Force TD | N | 66.6 | 67.2 | 53.3 | 55.5 | 71.9 | 74.1 |
| Ultimate Tensile strength MD | Mpa | 28.7 | 39.4 | 23 | 25.4 | 38.6 | 42.3 |
| Ultimate Tensile strength TD | Mpa | 26.8 | 33.2 | 25.4 | 26 | 34.9 | 36.7 |
| Elongation at Break MD | % | 820 | 914 | 782 | 826 | 910 | 892 |

(continued)

| Table 1 | | Comp. Film 1 | Film 4 | Film 5 | Film 6 | Film 7 | Film 8 |
|---|---|---|---|---|---|---|---|
| Elongation at Break TD | % | 857 | 876 | 850 | 877 | 895 | 908 |
| Secant Modulus MD | MPa | 67 | 191 | 96 | 84 | 104 | 227 |
| Secant Modulus TD | MPa | 64 | 155 | | 89 | 97 | 234 |

| Table 2 | | Comp. Film 1 | Film 4 | Film 5 | Film 6 | Film 7 | Film 8 |
|---|---|---|---|---|---|---|---|
| Holding Force @40%/25% pre-stretch | N | 7.5 | 7.4 | 6.7 | 6.2 | 6.7 | 7.1 |
| Permanent linear deformation (25%) | mm | 7 | 13 | 11 | 10 | 11 | 25 |
| Holding Force @60%/40% pre-stretch | N | 7.7 | 7.2 | 7.1 | 6.2 | 7.1 | 6.3 |
| Permanent linear deformation (40%) | mm | 13 | 21 | 19 | 19 | 19 | 34 |
| Holding Force @80%/60% pre-stretch | N | 8.3 | 7.3 | 7.7 | 7.2 | 7.8 | 7 |
| Permanent linear deformation (60%) | mm | 22 | 31 | 28 | 27 | 27 | 34 |
| Holding Force @100%/80% pre-stretch | N | 8.6 | 7.7 | 7.9 | 7.4 | 7.7 | 6.8 |
| Permanent linear deformation (80%) | mm | 33 | 44 | 37 | 37 | 38 | 52 |
| Puncture max load D4833 (sharp) | N | 50 | 52 | 43 | 42 | 47 | 60 |
| Puncture extension D4833 (sharp) | mm | 57 | 53 | 55 | 57 | 57 | 57 |

## Claims

1. A multilayer film comprising at least three layers, two outer layers and a core layer, wherein the core layer comprises:

   10 to 40 wt%, (such as 10 to 24.5 wt%) based on the total weight of the layer, of an ethylene plastomer with a density of 865 to 915 kg/m$^3$; and
   15 to 60 wt%, based on the total weight of the layer, of a heterophasic polypropylene copolymer;
   said outer layers independently comprising 50 wt% or more, based on the weight of the layer, of a unimodal or multimodal linear low density polyethylene having a density of 908 to 935 kg/m$^3$;
   wherein said multilayer film comprises less than 5 wt% of ethylene vinyl acetate.

2. A multilayer film as claimed in claim 1 comprising at least three layers, two outer layers and a core layer, wherein the core layer comprises:

   10 to 25 wt% (such as 10 to 24.5 wt%), based on the total weight of the layer, of an ethylene plastomer with a density of 865 to 915 kg/m$^3$;
   15 to 60 wt%, based on the total weight of the layer, of a multimodal linear low density polyethylene having a density of 908 to 935 kg/m$^3$; and
   15 to 60 wt%, based on the total weight of the layer, of a heterophasic polypropylene copolymer;
   said outer layers independently comprising 50 wt% or more, based on the weight of the layer, of a unimodal or multimodal linear low density polyethylene having a density of 908 to 935 kg/m$^3$;
   wherein said multilayer film comprises less than 5 wt% of ethylene vinyl acetate

3. A multilayer film as claimed in claim 1 or 2 comprising at least five layers, two outer layers, two subskin layers and a core layer,
   wherein the subskin layers independently comprise 10 to 60 wt% (such as 10 to 44.5 wt%), based on the weight of the layer, of an ethylene plastomer with a density between 865 and 915 kg/m$^3$.

4. A multilayer film comprising at least three layers, two outer layers and a core layer, wherein the core layer comprises:

at least 75 wt% of a post-consumer resin and/or post industrial resin rLDPE and/or rLLDPE
said outer layers independently comprising 50 wt% or more, based on the weight of the layer, of a unimodal or multimodal linear low density polyethylene having a density of 908 to 935 kg/m$^3$;
wherein said multilayer film comprises less than 5 wt% of ethylene vinyl acetate

5. A multilayer film as claimed in claim 4 comprising at least five layers, two outer layers, two subskin layers and a core layer,
wherein the subskin layers independently comprise 10 to 60 wt%, based on the weight of the layer, of an ethylene plastomer with a density between 865 and 915 kg/m$^3$.

6. A multilayer film according to any preceding claim, wherein the outer layers independently comprise a multimodal linear low density polyethylene terpolymer.

7. A multilayer film according to any preceding claim, wherein the core layer comprises a multimodal linear low density polyethylene terpolymer, such as 15 to 60 wt% thereof.

8. A multilayer film according to any preceding claim wherein the subskin layers independently comprise a multimodal linear low density polyethylene terpolymer, such as 25 to 70 wt% of a multimodal linear low density polyethylene terpolymer.

9. A multilayer film according to any preceding claim wherein the subskin layers independently comprise 15 to 60 wt% of an ethylene plastomer with a density between 865 and 915 kg/m$^3$.

10. A multilayer film according to any preceding claim wherein the subskin layers comprise a heterophasic polypropylene copolymer.

11. A multilayer film according to any preceding claim wherein the ethylene plastomer of the core layer is a plastomer of ethylene and 1-octene and/or wherein the ethylene plastomer of the core layer has a density of 865 and 895 kg/m$^3$, preferably 875 to 890 kg/m$^3$, further preferably 875 to 885 kg/m$^3$.

12. A multilayer film according to any preceding claim wherein the subskin layers have the same composition; and/or wherein the outer layers have the same composition.

13. A multilayer film according to any preceding claim wherein the outer layers comprise an antiblocking additive.

14. A multilayer film according to any preceding claim wherein each outer layer forms 10 to 20 % of the film thickness; and/or wherein each subskin layer forms 15 to 30 % of the film thickness and/or wherein the core layer forms 20 to 30 % of the film thickness.

15. A multilayer film according to any preceding claim which is a stretch hood.

16. Use of the multilayer film according to any one of claims 1 to 15 for stretch hood applications.

17. A process for wrapping an object, such as a pallet of goods, in a protective covering comprising wrapping at least the top and sides of the object in a stretch hood as claimed in any one of claims 1 to 15 and allowing the elastic recovery in the stretch hood to provide a holding force around the packed object.

Europäisches
Patentamt
European
Patent Office
Office européen
des brevets

# EUROPEAN SEARCH REPORT

**Application Number**

EP 22 16 1578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2021/259910 A1 (TRIOPLAST NYBORG AS [DK]) 30 December 2021 (2021-12-30)<br>* claims 1-3, 7-9, 11, 15 *<br>* figures 1, 3a, 3b *<br>* Film 4A * | 4-9,<br>11-17<br>1-3,10 | INV.<br>B32B27/08<br>B32B27/32 |
| A | WO 2020/219378 A1 (DOW GLOBAL TECHNOLOGIES LLC [US]) 29 October 2020 (2020-10-29)<br>* page 9, lines 4-11 *<br>* page 12, lines 4-16 *<br>* page 13, lines 18-28 *<br>* page 21, lines 4-21 *<br>* CE C, CE D;<br>page 18; table 5 * | 1-17 | |
| A | EP 1 813 423 A1 (RKW AG [DE])<br>1 August 2007 (2007-08-01)<br>* claim 1 *<br>* paragraph [0001] * | 1-17 | |
| A | WO 2020/136166 A1 (BOREALIS AG [AT])<br>2 July 2020 (2020-07-02)<br>* table 1 *<br>* claim 1 * | 1-17 | **TECHNICAL FIELDS SEARCHED (IPC)**<br><br>B32B |
| A | EP 2 653 392 A1 (BOREALIS AG [AT])<br>23 October 2013 (2013-10-23)<br>* claims 9-11 * | 1-17 | |
| A | EP 3 154 776 B1 (DOW GLOBAL TECHNOLOGIES LLC [US]; DOW QUIM MEXICANA S A DE C V [MX]) 19 January 2022 (2022-01-19)<br>* claim 1 * | 1-17 | |

The present search report has been drawn up for all claims

| Place of search | Date of completion of the search | Examiner |
|---|---|---|
| The Hague | 22 August 2022 | Yu, Sze Man |

EPO FORM 1503 03.82 (P04C01)

## ANNEX TO THE EUROPEAN SEARCH REPORT
## ON EUROPEAN PATENT APPLICATION NO.

EP 22 16 1578

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2022

| Patent document cited in search report | | Publication date | Patent family member(s) | | Publication date |
|---|---|---|---|---|---|
| WO 2021259910 | A1 | 30-12-2021 | NONE | | |
| WO 2020219378 | A1 | 29-10-2020 | AR | 118648 A1 | 20-10-2021 |
| | | | CA | 3136166 A1 | 29-10-2020 |
| | | | CN | 113613903 A | 05-11-2021 |
| | | | EP | 3959075 A1 | 02-03-2022 |
| | | | JP | 2022529899 A | 27-06-2022 |
| | | | WO | 2020219378 A1 | 29-10-2020 |
| EP 1813423 | A1 | 01-08-2007 | EP | 1813423 A1 | 01-08-2007 |
| | | | WO | 2007085283 A1 | 02-08-2007 |
| WO 2020136166 | A1 | 02-07-2020 | CN | 113302054 A | 24-08-2021 |
| | | | EP | 3902677 A1 | 03-11-2021 |
| | | | US | 2022063253 A1 | 03-03-2022 |
| | | | WO | 2020136166 A1 | 02-07-2020 |
| EP 2653392 | A1 | 23-10-2013 | CN | 104487349 A | 01-04-2015 |
| | | | EP | 2653392 A1 | 23-10-2013 |
| | | | ES | 2555271 T3 | 30-12-2015 |
| | | | US | 2015068943 A1 | 12-03-2015 |
| | | | WO | 2013156533 A1 | 24-10-2013 |
| EP 3154776 | B1 | 19-01-2022 | AR | 100830 A1 | 02-11-2016 |
| | | | AR | 100866 A1 | 09-11-2016 |
| | | | BR | 112016028848 A2 | 22-08-2017 |
| | | | BR | 112016029015 A2 | 22-08-2017 |
| | | | CN | 106457806 A | 22-02-2017 |
| | | | CN | 106457807 A | 22-02-2017 |
| | | | EP | 3154776 A1 | 19-04-2017 |
| | | | EP | 3154777 A1 | 19-04-2017 |
| | | | JP | 6807836 B2 | 06-01-2021 |
| | | | JP | 6963498 B2 | 10-11-2021 |
| | | | JP | 6993462 B2 | 13-01-2022 |
| | | | JP | 2017517423 A | 29-06-2017 |
| | | | JP | 2017517424 A | 29-06-2017 |
| | | | JP | 2020147043 A | 17-09-2020 |
| | | | KR | 20170044614 A | 25-04-2017 |
| | | | KR | 20170044636 A | 25-04-2017 |
| | | | TW | 201601920 A | 16-01-2016 |
| | | | TW | 201609412 A | 16-03-2016 |
| | | | US | 2015360449 A1 | 17-12-2015 |
| | | | US | 2016000615 A1 | 07-01-2016 |
| | | | WO | 2015191942 A1 | 17-12-2015 |
| | | | WO | 2015191944 A1 | 17-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018096015 A
- WO 2011159376 A
- WO 2017186953 A

**Non-patent literature cited in the description**

- **C. GREIN ; M. GAHLEITNER ; B. KNOGLER ; S. NESTELBERGER.** Melt viscosity effects in Ethylene-Propylene Copolymers. *Rheol.Acta,* 2007, vol. 46, 1083-1089